## Europäisches Patentamt
## European Patent Office
## Office européen des brevets

(19)

(11) Veröffentlichungsnummer : **0 066 743**
**B1**

(12)

# EUROPÄISCHE PATENTSCHRIFT

(45) Veröffentlichungstag der Patentschrift :
**26.03.86**

(51) Int. Cl.⁴ : **G 01 S 15/60, G 01 S 15/62**

(21) Anmeldenummer : **82104355.1**

(22) Anmeldetag : **18.05.82**

(54) **Messeinrichtung zum selbsttätigen Messen von Geschwindigkeit, Weg sowie Richtungsänderungen eines beweglichen Körpers.**

(30) Priorität : **10.06.81 DE 3122963**

(43) Veröffentlichungstag der Anmeldung :
**15.12.82 Patentblatt 82/50**

(45) Bekanntmachung des Hinweises auf die Patenterteilung : **26.03.86 Patentblatt 86/13**

(84) Benannte Vertragsstaaten :
**AT BE CH FR GB IT LI LU NL SE**

(56) Entgegenhaltungen :
**DE-A- 2 016 642**
**DE-A- 2 019 305**
**FR-A- 1 273 530**
**US-A- 3 277 430**
**US-A- 3 833 906**

(73) Patentinhaber : **KRONE GmbH**
**Goerzallee 311**
**D-1000 Berlin 37 (DE)**

(72) Erfinder : **Rott, Joachim**
**Prinz-Handjerystrasse 49a**
**D-1000 Berlin 37 (DE)**
Erfinder : **Thelen, Wolfgang, Prof. Dr.**
**Allemannenstrasse 12**
**D-1000 Berlin 28 (DE)**
Erfinder : **Hesselbrock, Bernd, Dr.**
**Neheimerstrasse 12**
**D-1000 Berlin 27 (DE)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

**Beschreibung**

Die Erfindung betrifft eine Meßeinrichtung zum selbsttätigen Messen von Geschwindigkeit, zurückgelegtem Weg sowie Richtungsänderungen eines beweglichen Körpers gemäß dem Oberbegriff des Anspruchs 1.

Bei landwirtschaftlichen Fahrzeugen ist das übliche Verfahren der Geschwindigkeits- und Wegmessung durch Messung der Radumdrehungen und Multiplikation mit dem Radumfang wegen des Schlupfs, der seitlichen Abweichungen durch Rutschen sowie durch einen differierenden Reifendruck so stark fehlerbehaftet, daß ein automatisches Führen derartiger Fahrzeuge nicht möglich erscheint.

Aus der FR-A-1 273 530 ist eine Vorrichtung zum selbsttätigen Messen von Geschwindigkeit und Weg gemäß dem Oberbegriff des Anspruchs 1 bekannt. Diese bekannte Vorrichtung weist Meßeinrichtungen auf, welche aus in und gegen die Fahrtrichtung gerichteten Ultraschall-Sendern und -Empfängern bestehen, wobei die Sender derart angeordnet sind, daß die unter einem Winkel ausgesendeten Ultraschallstrahlen an der Fahrbahn reflektiert und von den Empfängern empfangen werden, um aus der auftretenden Dopplerverschiebung die Geschwindigkeit zu bestimmen.

Nachteilig ist bei der bekannten Vorrichtung, daß sie zur Bestimmung von etwaigen Richtungsänderungen der Fahrzeuglängsachse nicht geeignet ist.

Aus der DE-A-2 016 642 ist ein Verfahren und Sonar-Impuls-System zur Steuerung von Fahrzeugen, insbesondere von Wasserfahrzeugen bekannt. Das bekannte Verfahren verwendet ausdrücklich kein kontinuierliches Signal, sondern eine Reihe von Impulsen unterschiedlicher Dauer und Abstände.

Dadurch sollen u. a. die Nebensprechstörungen gemindert und die Frequenzseitenbänder unterdrückt werden. Um aus der ausgestrahlten und reflektierten Impulsfolge ein kontinuierliches Signal zu bilden, wird ein Phasenregelkreis verwendet. Eine Anzahl von akustischen Wandlern (Sender und Empfänger) sind am Schiffsrumpf längs der Längsachse und der Querachse beabstandet angeordnet. Diese Anordnung jeweils zweier Wandler längs jeder Achse dient bei der DE-A-2 016 642 dazu, die durch Roll-, Stampf- oder Gier-Bewegungen des Wasserfahrzeugs verursachten Frequenzänderungen zu kompensieren.

Es ist Aufgabe der vorliegenden Erfindung, unter Vermeidung eines ackerfesten Bezugssystems eine Vorrichtung zum selbsttätigen Bestimmen von Geschwindigkeit und zurückgelegtem Weg zu ermöglichen, die auch für eine Ermittlung von Richtungsänderungen der Bewegung des Körpers und damit zum automatischen Führen von landwirtschaftlichen Fahrzeugen geeignet ist.

Die obige Aufgabe wird bei einer Vorrichtung gemäß dem Oberbegriff des Anspruchs 1 erfindungsgemäß durch die in seinem Kennzeichen angegebenen Merkmale gelöst.

Durch die neue Meßeinrichtung kann somit der wesentliche Vorteil erreicht werden, daß durch die Anordnung einer linken und rechten Meßeinrichtung eine Richtungsabweichung des Fahrzeuges längs eines Weges infolge eines Vergleiches der beiden gewonnenen Wegsignale durch eine Korrektur verhindert wird.

Vorteilhafte weitere Ausgestaltungen der Erfindung sind in den Unteransprüchen gekennzeichnet.

Die Erfindung soll nunmehr anhand eines in der Zeichnung dargestellten Ausführungsbeispieles näher erläutert werden. Es zeigen :

Figur 1 ein Fahrzeug mit einer Meßeinrichtung gemäß der Erfindung, bei welcher die Meßköpfe in und gegen die Fahrtrichtung senden und empfangen,

Figur 2 einen elektronischen Blockschaltplan der erfindungsgemäßen Meßeinrichtung von Fig. 1, und

Figur 3 die schematische Ansicht der vorwärts und rückwärts gerichteten Meßteile gemäß der Erfindung.

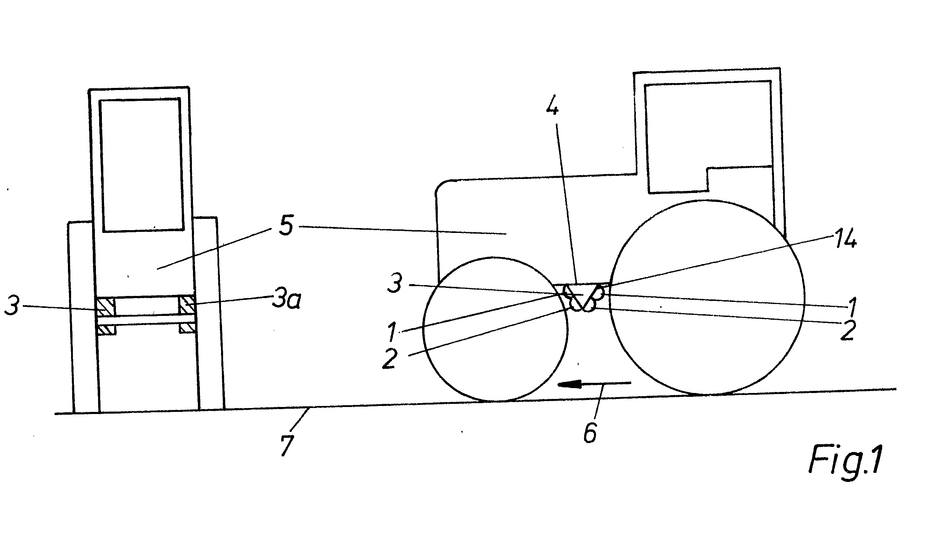

Entsprechend Fig. 1 sind gemäß der Erfindung zwei Meßeinrichtungen 3, 3a vorgesehen, welche aus je einem Sender 1 und einem Empfänger 2 bestehen. Der Sender 1 strahlt dabei unter einem Winkel ($\alpha$) sein Ultraschall-Signal in und/oder gegen die Fahrtrichtung ab. Das an Bodenunebenheiten reflektierte Signal gelangt in den Empfänger 2.

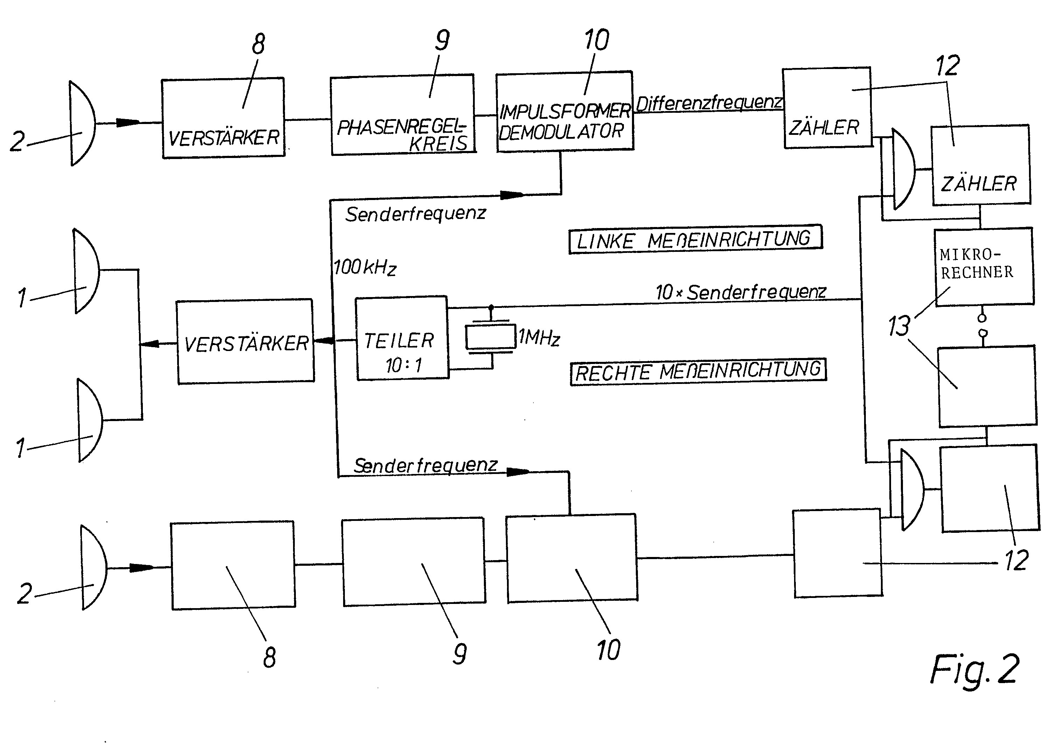

Gemäß Fig. 2 wird das Ausgangssignal des Empfängers 2 in einem nachfolgenden Verstärker 8 regelmäßig so weit angehoben, daß die Signalhöhe ausreicht, um einen Phasenregelkreis 9 (PLL) anzusteuern. Der Phasenregelkreis 9 folgt einer Änderung des Eingangssignals so träge, daß Dopplerverschiebungen des Eingangssignals durch ruckartige Bewegungen des Fahrzeuges 5 keine wesentliche Änderung der Ausgangsfrequenz des Phasenregelkreises 9 zur Folge haben. Hingegen werden Änderungen der Ausgangsfrequenz des Phasenregelkreises 9 infolge von Geschwindigkeitsänderungen des Fahrzeuges nach einigen zehntel Sekunden auf das Ausgangssignal übertragen. Am Ausgang des Phasenregelkreises 9 ist ein Demodulator 10 angeschlossen, der bei Messung in Fahrtrichtung die Senderfrequenz von der Dopplerfrequenz subtrahiert, bzw. bei Messung gegen die Fahrtrichtung die Dopplerfrequenz von der Senderfrequenz subtrahiert und als Differenzsignal weiterleitet. Dieses Differenzsignal besitzt dabei eine Frequenz, welche in einem mathematisch exakten Zusammenhang zu der Geschwindigkeit des Fahrzeuges 5 steht.

Das Differenzsignal wird einem Digitalzähler 12 zugeführt, welcher nach einer bestimmten Anzahl von Impulsen im Augenblick des Nulldurchganges einen Ausgangsimpuls abgibt, wodurch ein Informationsverlust durch das Auftreten von Zählfehlern vermieden wird. Dieses Zeitintervall wird einem Mikrorechner 13 zugeführt. Der Mikrorechner kann eine handelsübliche Rechnereinheit bestehend aus CPU, Datenspeicher, Programmspeicher und Ein/Ausgabeports sein. Er ist in Fig. 2, um die Aufteilung in einen linken und rechten Meßkanal zu verdeutlichen, als aus zwei Einheiten bestehend dargestellt. In einem realen System sind jedoch allenfalls die Ein/Ausgabeports und der Datenspeicher auf die beiden Kanäle aufgeteilt. Innerhalb dieses Mikrorechners 13 erfolgt die Meßwertumwandlung von Frequenz in Geschwindigkeit sowie Frequenz in Zeit und Weg. Der Mikrorechner 13 bestimmt aus der Differenzfrequenz und der als Eingangssignal zugeführten Senderfrequenz die Geschwindigkeit. Durch eine mathematische Integration der Geschwindigkeit nach der Zeit, d. h. durch Zählung der Differenzfrequenz, ergibt sich der Weg, welchen das betreffende Fahrzeug 5 zurückgelegt hat. Da sich das Fahrzeug 5 überwiegend auf unebener Fahrbahn 7 bewegt, wird der Winkel des reflektierten Strahls um einen Mittelwert schwanken. Dies bedingt eine Längenänderung des Meßstrahles, was bei gleich großen Schwankungen um den Mittelwert zu einem Fehler in der Geschwindigkeits- und Wegbestimmung führt. Aus diesem Grunde besteht sowohl die linke als auch rechte Meßeinrichtung 3, 3a aus je einem vorwärtsmessenden Meßteil I und einem rückwärtsmessenden Meßteil II, wobei der eine Meßteil die Senderfrequenz + Differenzfrequenz und der andere Meßteil die Senderfrequenz — Differenzfrequenz bestimmt.

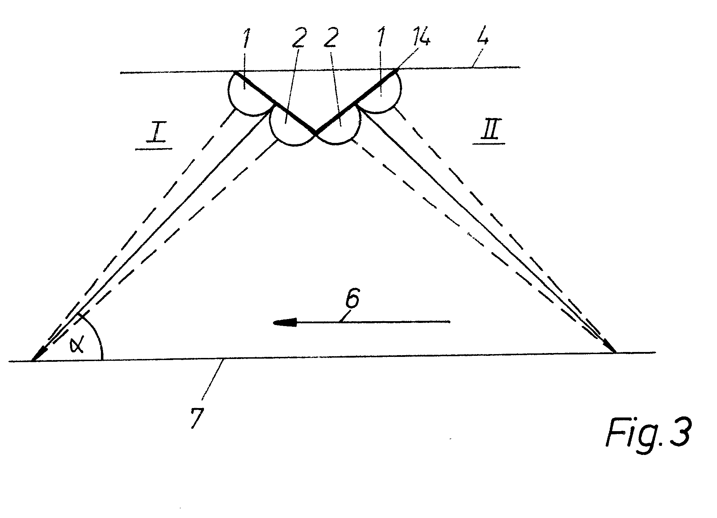

Gemäß Fig. 3 sind beide Meßteile I und II auf einer gemeinsamen winkelförmigen Grundplatte 14, und zwar auf jeweils einem nach vorn respektive nach hinten gerichteten Schenkel, befestigt. Durch Vorsehen einer Einrichtung, welche einen Vergleich der beiden Dopplersignale der vorwärts und rückwärts messenden Meßteile gestattet, kann im Rahmen der Erfindung der Meßfehler auf Werte wesentlich unter 0,1 % verringert werden. Die winkelförmige Grundplatte 14 ist dabei an einer Fahrzeugquerachse befestigt, wobei Dämpferelemente vorgesehen sind, welche auftretende Kippbewegungen bedämpfen. Durch den Vergleich der Meßwerte der Meßteile I und II abgeleitete Fehlerkorrekturen werden dem Mikrorechner 13 zugeführt. Ändert sich durch vertikales Durchfedern des Fahrzeuges 5 die Meßstrahllänge, so tritt innerhalb des Meßsignals ein kurzzeitiger Fehler auf, der jedoch beim Zurückfedern wieder auf Null absinkt.

Um Richtungsabweichungen zu messen, sind gemäß der Erfindung zwei Meßeinrichtungen 3, 3a in einem vorgegebenen Abstand zueinander angeordnet. Die gleichzeitig gewonnenen Wegsignale ergeben dabei einen Meßwert für die Richtungsabweichung des Fahrzeuges 5 längs des Weges.

**Patentansprüche**

1. Vorrichtung zum selbsttätigen Bestimmen von Geschwindigkeit, zurückgelegtem Weg und etwaigen Richtungsänderungen eines sich bewegenden Körpers (5) relativ zum Untergrund (7) mit wenigstens einem Sender/Empfänger-Paar (1, 2) für Ultraschall unter Aussendung von Ultraschallstrahlung in und/oder entgegen der Bewegungsrichtung (6) des Körpers (5) und unter einem Winkel ($\alpha$) zum Untergrund (7), Empfang von am Untergrund (7) reflektierter Ultraschallstrahlung und Erfassung der auftretenden Dopplerverschiebung für die Ermittlung der Geschwindigkeit und des zurückgelegten Wegs, dadurch gekennzeichnet, daß an dem Körper (5) mit im wesentlichen seiner Breite entsprechendem Abstand voneinander zwei wenigstens je ein Sender/Empfänger-Paar (1, 2) enthaltende Meßeinrichtungen (3, 3a) angeordnet sind, deren gleichzeitige Wegstreckensignale eine Anzeige für Änderungen der Bewegungsrichtung (6) des Körpers (5) liefern.

2. Vorrichtung nach Anspruch 1, dadurch gekennzeichnet, daß die Sender/Empfänger-Paare (1, 2) beider Meßeinrichtungen (3, 3a) auf eine Ultraschallabstrahlung bzw. einen Ultraschallempfang sowohl in als auch entgegen der Bewegungsrichtung (6) des Körpers (5) eingerichtet sind und die empfangenen Signale einem Vergleich unterzogen werden.

3. Vorrichtung nach Anspruch 1 oder 2, dadurch gekennzeichnet, daß jedem Empfänger (2) im Anschluß an einen Verstärker (8) für die Verstärkung der Dopplersignale jeweils ein Phasenregelkreis (9) zur Regenerierung nachgeschaltet ist, dessen Zeitkonstante Signalausfälle am Empfänger (2) für einen gegen Änderungen der Körpergeschwindigkeit kleinen Zeitraum überbrückt, so daß Rück- und Rüttelbewegungen des Körpers (5) keinen wesentlichen Einfluß auf die Dopplerfrequenz haben.

4. Vorrichtung nach Anspruch 3, dadurch gekennzeichnet, daß den Phasenregelkreisen (9) jeweils Demodulatoren (10) nachgeschaltet sind, deren Ausgangsfrequenzen der Differenz von Senderfrequenz und Empfängerdopplerfrequenz entsprechen.

5. Vorrichtung nach Anspruch 4, dadurch gekennzeichnet, daß den Demodulatoren (10) jeweils Digitalzähler (12) nachgeschaltet sind, die nach einer vorgegebenen Anzahl von Impulsen im Augenblick des Nulldurchgangs jeweils einen Impuls abgeben.

6. Vorrichtung nach Anspruch 5, dadurch gekennzeichnet, daß an die Digitalzähler (12) jeweils ein Mikrorechner (13) für die Meßsignalumrechnung in Wegstrecken angeschlossen ist.

7. Vorrichtung nach einem der Ansprüche 2 bis 6, dadurch gekennzeichnet, daß in jeder Meßeinrichtung (3, 3a) die in und entgegen der Bewegungsrichtung (6) arbeitenden Sender/Empfänger-Paare (1, 2) auf einer gemeinsamen winkelförmigen Grundplatte (14) angeordnet sind.

**Claims**

1. A device for automatically determining the velocity, the distance travelled, and possible changes of direction of a moving body (5) relative to the ground (7), comprising at least one ultrasonic transmitter/receiver couple (1, 2) emitting ultrasonic radiation in the direction of movement (6) of the body (5) and/or in opposition thereto and at an angle (α) to the ground (7), receiving ultrasonic radiation reflected by the ground (7), and detecting the occurring Doppler shift for determining the velocity and the distance travelled, characterised in that two measuring devices (3, 3a) each including at least one transmitter/receiver couple (1, 2) are provided on said body (5) at a relative mutual spacing substantially corresponding to the width of said body, the simultaneous distance signals thereof supplying an indication of changes in the direction of movement (6) of said body (5).

2. A device as claimed in claim 1, characterised in that the transmitter/receiver couples (1, 2) of both measuring devices (3, 3a) are adapted to transmit and receive ultrasonic radiation both in the direction of movement (6) of said body (5) and in opposition thereto, and the received signals are subjected to comparison.

3. A device as claimed in claim 1 or claim 2, characterised in that, following an amplifier (8) for amplifying the Doppler signals, every receiver (2) includes a subsequent phase control circuit (8) for regeneration whose time constant bridges signal drop-outs at the receiver (2) for a period which is short relative to changes in the velocity of said body, so that jerking and vibratory motions of the body (5) have no substantial effect on the Doppler frequency.

4. A device as claimed in claim 3, characterised in that each phase control circuit (9) has a respective demodulator (10) connected to the output thereof, the output frequencies of said demodulators corresponding to the difference between transmitter frequency and receiver Doppler frequency.

5. A device as claimed in claim 4, characterised in that each of said demodulators (10) has a digital counter (12) connected to the output thereof, said counters after a predetermined number of pulses delivering a respective pulse at the moment of zero-axis crossing.

6. A device as claimed in claim 5, characterised in that each digital counter (12) has a respective microcomputer (13) connected thereto for converting the detected signal into distances travelled.

7. A device as claimed in any of the claims 2 to 6, characterised in that in every measuring device (3, 3a) the transmitter/receiver couples (1, 2), which operate in the direction of movement (6) and in opposition thereto, are disposed on a common angular base plate (14).

**Revendications**

1. Dispositif pour la détermination automatique de la vitesse, de la distance parcourue et d'éventuels changements de direction d'un corps (5) se déplaçant par rapport au sol (7), avec au minimum une paire émetteur-récepteur (1, 2) d'ultrasons, avec émission d'un faisceau d'ultrasons dans le sens de déplacement (6) du corps (5) et/ou dans le sens inverse, sous un angle (α) par rapport au sol (7), réception du faisceau d'ultrasons réfléchi par le sol (7) et détermination du déplacement Doppler produit pour détermination de la vitesse et de la distance parcourue, ledit dispositif étant caractérisé en ce que deux dispositifs de mesure (3, 3a) comportant chacun au moins une paire émetteur-récepteur (1, 2), sont disposés sur le corps (5) avec un écartement sensiblement égal à la largeur de ce dernier, et dont les signaux simultanés de distance parcourue fournissent une indication des changements de direction du déplacement (6) du corps (5).

2. Dispositif selon revendication 1, caractérisé en ce que les paires émetteur-récepteur (1, 2) des deux dispositifs de mesure (3, 3a) sont équipées pour émettre ou recevoir des ultrasons aussi bien dans le sens de déplacement (6) du corps (5) ou dans le sens opposé, les signaux reçus étant soumis à une comparaison.

3. Dispositif selon une des revendications 1 ou 2, caractérisé en ce qu'en aval de chaque récepteur (2) sont branchés un amplificateur (8) des signaux Doppler puis une boucle de régulation de phase (9) de régénération, dont la constante de temps couvre les défaillances du signal sur le récepteur (2) pendant un intervalle de temps faible par rapport aux variations de la vitesse du corps, de sorte que les mouvements saccadés et vibratoires du corps (5) n'exercent aucune influence sensible sur la fréquence Doppler.

4. Dispositif selon revendication 3, caractérisé en ce qu'en aval de chaque boucle de régulation de phase (9) est monté un démodulateur (10) dont la fréquence de sortie est égale à la différence de la fréquence d'émission et de la fréquence Doppler de réception.

5. Dispositif selon revendication 4, caractérisé en ce qu'en aval de chaque démodulateur (10) est monté un compteur numérique (12) qui, après un nombre prédéterminé d'impulsions, délivre une impulsion lors du passage par zéro.

6. Dispositif selon revendication 5, caractérisé en ce qu'en aval de chaque compteur numérique (12) est monté un microcalculateur (13) pour la conversion des signaux mesurés en distances parcourues.

7. Dispositif selon une quelconque des revendications 2 à 6, caractérisé en ce que dans chaque dispositif de mesure (3, 3a), les paires émetteur-récepteur (1, 2) fonctionnant dans le sens du déplacement (6) et dans le sens opposé sont disposées sur une cornière commune (14).

Fig.1

0 066 743

Fig. 2

0 066 743

*Fig. 3*